# EUROPÄISCHE PATENTSCHRIFT

(11) **EP 3 865 951 B1**
(45) Veröffentlichungstag und Bekanntmachung des Hinweises auf die Patenterteilung: **09.07.2025**
(21) Anmeldenummer: 21155909.1
(22) Anmeldetag: 09.02.2021
(51) Int. Cl.: G03H 1/02, G03H 1/20, B65H 23/16, B65H 16/02, B65H 9/10, B65H 9/08, B65H 5/22, B32B 38/18, B32B 37/10, B32B 37/00, B25B 11/00, B65H 20/14

(54) **BELICHTUNGSTISCH FÜR EINE HOLOGRAMMBELICHTUNGSMASCHINE UND VERFAHREN ZUM EINBRINGEN EINES VOLUMENHOLOGRAMMS IN EINEN FILMABSCHNITT**
EXPOSURE TABLE FOR A HOLOGRAM EXPOSURE MACHINE AND METHOD FOR INTRODUCING A VOLUME HOLOGRAM INTO A FILM SECTION
TABLE D'EXPOSITION POUR UNE MACHINE D'EXPOSITION HOLOGRAMME ET PROCÉDÉ D'INSERTION D'UN HOLOGRAMME DE VOLUME DANS UNE SECTION DE FILM

(30) Priorität: 12.02.2020 DE 102020103612
(43) Veröffentlichungstag der Anmeldung: 18.08.2021
(73) Patentinhaber: Bundesdruckerei GmbH, 10969 Berlin (DE)
(72) Erfinder: Langgaßner, Michael, 81245 München (DE); Richter, Werner, 80999 München (DE)
(74) Vertreter: Hentrich Patent- & Rechtsanwaltspartnerschaft mbB

(56) Entgegenhaltungen:
- DE-A1- 102013 200 980
- JP-A- H11 249 535
- JP-B2- 4 318 996
- KR-B1- 102 001 019
- ANONYMOUS: "Apparatus and method for replicating holograms in a recording film", RESEARCH DISCLOSURE, KENNETH MASON PUBLICATIONS, HAMPSHIRE, UK, GB, vol. 404, no. 2, 1 December 1997 (1997-12-01), XP007122187, ISSN: 0374-4353

## Beschreibung

Die Erfindung betrifft einen Belichtungstisch für eine Hologrammbelichtungsmaschine, mit einer Halteeinrichtung, in welcher ein Master aufgenommen ist, und mit einer Filmtransporteinrichtung, die ausgebildet ist, einen Hologrammfilm relativ bezüglich der Halteeinrichtung zu transportieren und einen zu belichtenden Filmabschnitt relativ bezüglich des Masters für eine Belichtung zu positionieren. Die Erfindung betrifft darüber hinaus ein Verfahren zum Einbringen eines Volumenhologramms in einen Filmabschnitt eines Hologrammfilms.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert, wie beispielsweise den Druckschriften DE 10 2012 215 540 A1, DE 10 2007 042 385 A1 und DE 10 2007 042 386 A1 zu entnehmen ist. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden beim Kontaktkopierverfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion der, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt. Ein Verfahren zur Herstellung eines Masters und ein Kontaktkopierverfahren sind der EP 0 896 260 A2 zu entnehmen.

Die holografischen Merkmale auf dem Belichtungsfilm können nicht oder nur fehlerhaft im Filmmaterial "gespeichert" werden, wenn der Hologrammfilm während seiner Belichtung nicht vollständig plan, blasen- sowie knitterfrei, insbesondere bewegungslos oder optisch stabil gegenüber dem Master positioniert ist. Durch Blasen oder Knitterstellen können bei einer Belichtung des Films unerwünschte Reflexionen auftreten.

In ANONYMOUS: "Apparatus and method for replicating holograms in a recording film", RESEARCH DISCLOSURE, KENNETH MASON PUBLICATIONS, HAMPSHIRE, UK, GB, Bd. 404, Nr. 2, 1. Dezember 1997 (1997-12-01), XP007122187, ISSN: 0374-4353 werden eine Vorrichtung und ein Verfahren zur Reproduktion von Hologrammen in einem Aufzeichnungsfilm beschrieben. Die Vorrichtung entfernt die Deckfolie eines Aufzeichnungsfilms vor dem Schritt der holografischen Belichtung.

Die KR 102 001 019 B1 beschreibt eine Hologramm-Übertragungsvorrichtung, die selektiv ein Transmissionshologramm und ein Reflexionshologramm in einer einzigen Vorrichtung erzeugen und den Rekonstruktionswinkel leicht einstellen kann.

Die JP H11 249535 A beschreibt eine Hologramm-Master-Haltevorrichtung zum Kopieren eines Reflexions- oder Transmissionshologramms durch dichtes Anbringen eines licht-empfindlichen Materials an der Hologrammvorlage.

Die JP 4 318996 B2 beschreibt ein Verfahren zur Herstellung einer Lichtbeugungsstruktur, die eine Beugungsstruktur wie ein Beugungsgitter oder ein Hologramm enthält. Zahlreiche winzige Löcher sind auf einer Oberfläche der Trommel vorgesehen, und die Luft im Inneren der Trommel wird durch eine Saugpumpe angesaugt, wodurch ein Unterdruck im Inneren der Trommel erzeugt wird. Die Hologrammfolie und die Hologrammplatte, die auf der Trommel aufliegen, werden an die Außenfläche der Trommel gesaugt.

Die DE 10 2013 200 980 A1 beschreibt eine Vorrichtung zum nachträglichen holografischen Kennzeichnen eines Verbundkörpers sowie ein entsprechendes Verfahren. Bei dieser Vorrichtung ist eine Auflageplatte vorhanden, auf die der Verbundkörper, nämlich das spätere Ausweis- Wert oder Sicherheitsdokument, aufgelegt werden kann. Die Auflageplatte umfasst dabei Saugöffnungen, um den Verbundkörper mit einem Unterdruck zu fixieren. Außerdem sind weitere Sauglöcher vorhanden, um auch den als Film bereitgestellten Hologramm-Master mit einem Unterdruck zu fixieren.

Es ist daher die Aufgabe der vorliegenden Erfindung, einen Belichtungstisch und ein Verfahren zum Einbringen eines Volumenhologramms in einen Hologrammfilm anzugeben, die zumindest einem der vorstehend erwähnten Nachteilen Rechnung tragen.

Diese Aufgabe wird mit einem Belichtungstisch mit dem Merkmalsbestand des Anspruchs 1 und durch ein Verfahren mit den Merkmalsbestand des Anspruchs 10 gelöst. Vorteilhafte Ausgestaltungen mit zweckmäßigen Weiterbildungen der Erfindung sind in den abhängigen Ansprüchen angegeben.

Der Belichtungstisch für eine Hologrammbelichtungsmaschine umfasst dabei eine der Halteeinrichtung zugeordnete Drucklufteinrichtung, die ausgebildet ist, den Filmabschnitt mittels eines Unterdrucks an dem in der Halteeinrichtung aufgenommenen Master zumindest zeitweise zu fixieren. Mit einem solchen Unterdruck ist gewährleistet, dass der Filmabschnitt plan und insbesondere luftblasenfrei gegenüber dem Master fixiert wird, wodurch sich die Ausschussrate von belichteten Hologrammen deutlich reduzieren lässt. Zusätzlich wird der Filmabschnitt vollständig plan, blasen- und knitterfrei gegenüber dem Master positioniert, womit Volumenreflexionshologramme betriebssicher in den Hologrammfilm einkopiert werden können.

Der Master einer Hologrammbelichtungsmaschine ist typischerweise aus einem Material geformt, welches umfangseitig scharfe Kanten aufweisen kann. Diese Kanten können zu Kratzern am Hologrammfilm beim Transport desselben über dem Master und über der Halteeinrichtung führen. Um diesem Problem zu begegnen, ist die Drucklufteinrichtung vorzugsweise ausgebildet, zumindest zeitweise einen Überdruck derart bereitzustellen, dass der Transport des Hologrammfilms relativ bezüglich des Masters von einem Luftpolster gestützt erfolgt. **In** anderen Worten ist die Drucklufteinrichtung also ausgebildet, eine Blasluft bereitzustellen, die den Hologrammfilm auf seiner dem Master zugewandten Seite mit Druckluft beaufschlagt, sodass Beschädigungen des Filmes wirksam vermieden werden.

Zur sicheren Fixierung des Filmabschnittes an dem Master während der Belichtung des Hologrammfilms hat es sich als vorteilhaft erwiesen, wenn die Drucklufteinrichtung mindestens eine Gasdurchtrittsanordnung umfasst, die randseitig bezüglich des in der Halteeinrichtung aufgenommenen Masters angeordnet ist und/oder die in dem Master selbst ausgebildet ist.

Eine zuverlässige Anlage des Filmabschnitts am Master ist dadurch geschaffen, dass die Gasdurchtrittsanordnung den Master umfangseitig rahmt, und dass die Gasdurchtrittsanordnung durch einen Schlitz oder durch eine mehrere Bohrungen umfassende Bohrungsanordnung (Bohrungsarray) gebildet ist.

Da ein Vakuum mit Druckluft häufig auf einfachere Weise zur Verfügung gestellt werden kann als ein mit einer Vakuumpumpe erzeugtes Vakuum, hat es sich als vorteilhaft erwiesen, wenn die Drucklufteinrichtung eine pneumatische Venturisaugdüse zur Erzeugung des Unterdrucks umfasst. Somit kann mit dem so gebildeten Vakuumejektor auf einfache Weise komprimierte Druckluft in den Ejektor eingeleitet werden, die an einer mit einer Querschnittsverengung versehenen Treibdüse (Venturi-Düse) beschleunigt wird. Dabei steigt der dynamische Druck an und der statische Druck der Luft sinkt. Nach dem Passieren der Treibdüse entspannt sich die beschleunigte Luft und ein Vakuum entsteht, wobei zusätzlich Luft durch den mit der Gasdurchtrittsanordnung strömungsmechanisch verbundenen Vakuum-Anschluss in den Ejektor gesaugt wird, die zusammen mit der angesaugten Luft durch den Schalldämpfer aus dem Ejektor austritt. Damit ist eine einfache Variante der Drucklufteinrichtung geschaffen, um wahlweise - ggfs. in Abhängigkeit einer geeigneten Stellung von Ventilen - umfangseitig am Master einen Unterdruck oder einen Überdruck bereitzustellen.

Um zu gewährleisten, dass auch die etwaig vorhandenen letzten Luftblasen zwischen dem zu belichteten Filmabschnitt des Hologrammfilms und dem Master beseitigt werden, hat es sich als vorteilhaft erwiesen, wenn eine Aufstreifeinrichtung vorhanden ist, um den zu belichteten Filmabschnitt auf den Master aufzustreifen.

Dabei ist die vorteilhafte Möglichkeit eröffnet, dass die Aufstreifeinrichtung einen zwischen zwei Anschlägen verschiebbaren Schlitten umfasst, an welchem eine auf einer Drehachse drehbar gelagerte und mit dem Filmabschnitt wechselwirkende Anpressrolle gelagert ist. Diese Anpressrolle kann also über den Filmabschnitt gerollt werden und trägt dabei etwaige Gaseinschlüsse zwischen dem Master und dem Hologrammfilm aus. Dabei ist außerdem die vorteilhafte Möglichkeit geschaffen, dass die Aufstreifeinrichtung alternierend, d.h. einerseits in einer Richtung filmaufwärts des Masters beginnend und andererseits filmabwärts des Masters beginnend, über den Filmabschnitt gerollt werden kann.

Um einen möglichst reibungslosen Transport des Hologrammfilms zu ermöglichen, ist es von Vorteil, wenn der Schlitten um eine senkrecht bezüglich der Drehachse der Anpressrolle orientierte Verfahrachse begrenzt verschwenkbar gelagert und damit die Anpressrolle zwischen einer angehobenen Stellung und einer abgesenkten Stellung verstellbar ist. In diesem Zusammenhang ist dabei die Möglichkeit vorhanden, dass insbesondere anschlagsnah oder am jeweiligen Anschlag jeweils eine Steuerkurve vorhanden ist, die ausgebildet ist, die Anpressrolle zwischen der angehobenen Stellung und der abgesenkten Stellung zu verstellen.

Zur Einstellung oder Variation der von der Anpressrolle ausgeübten Kraft auf den Filmabschnitt ist es sinnvoll, wenn dem Schlitten auf seiner dem Master abgewandten Seite eine Federanordnung zugeordnet ist, die den Anpressdruck der Anpressrolle auf den Master oder auf den sich am Master befindenden Filmabschnitt einstellt oder vorgibt. Die Andruckkraft der Anpressrolle wird dabei über das Moment der Federkraft um die Verfahrachse bestimmt.

Um Toleranzschwankungen ausgleichen zu können, um also in anderen Worten Ausgleichsbewegungen für die Anpressrolle bereitzustellen, ist es möglich, dass die Anpressrolle selbst an einem Haltearm drehbar gelagert ist, der mittels einer senkrecht zur Drehachse der Anpressrolle orientierten Schwenkachse derart am Schlitten fixiert ist, dass der Haltearm und damit die Anpressrolle begrenzt verschwenkbar gegenüber dem Schlitten gelagert sind.

Um zu gewährleisten, dass der Hologrammfilm beim Transport weder an der Halteeinrichtung noch an dem in der Halteeinrichtung aufgenommenen Master streift, ist erfindungsgemäß vorgesehen, dass die Filmtransporteinrichtung eine erste Filmhubeinrichtung umfasst, die zwischen einer angehobenen, einer Transportkonfiguration entsprechenden Stellung und einer abgesenkten, einer Belichtungskonfiguration entsprechenden Stellung verstellbar ist. Mit dieser Ausgestaltung ist zusätzlich die Möglichkeit eröffnet, dass der Hologrammfilm vor oder bei seinem Fixieren derart gegenüber dem Master gehalten wird, dass die Oberfläche des zu belichtenden Filmabschnitts und die Oberfläche des Masters unter einem spitzen Winkel aufeinander zu oder voneinander weg verlaufend orientiert sind. Durch eine solche "Rampe" bzw. durch einen solchen fiktiven "Keil" lässt sich bei der anschließenden Fixierung mittels der Saugluft hinreichend gut Luftblasen austreiben oder etwaige andere Gaseinschlüsse vermeiden, da diese vom spitzen Winkel weggedrückt werden, insbesondere in denjenigen Fällen, in denen zusätzlich eine Aufstreifeinrichtung zur Fixierung des Filmabschnitts am Master genutzt wird. Um einen derartigen "Keil" sowohl in als auch entgegen der Filmtransportrichtung bereitstellen zu können, ist zudem erfindungsgemäß vorgesehen, dass die Transporteinrichtung eine zweite Filmhubeinrichtung umfasst, die zwischen einer angehobenen, einer Transportkonfiguration entsprechenden Stellung und einer abgesenkten, einer Belichtungskonfiguration entsprechenden Stellung verstellbar ist.

Um den Transport des Hologrammfilms so reibungslos als möglich zu gestalten, ist es von Vorteil, wenn die erste Filmhubeinrichtung und/oder die zweite Filmhubeinrichtung eine um eine Achse drehbare Filmhubwalze umfasst. Mit der Filmhubwalze kann der Hologrammfilm angehoben oder abgesenkt werden.

Zur verbesserten Führung, insbesondere zum verbesserten Halten des Hologrammfilms, ist es von Vorteil, wenn die erste Filmhubeinrichtung und/oder die zweite Filmhubeinrichtung eine zur Filmhubwalze achsparallel angeordnete Führungswalze umfasst, die jeweils an einem begrenzt um die Achse verschwenkbaren Hebelarm drehbar gelagert ist.

Bei der Belichtung des Hologrammfilms ist es erforderlich und wünschenswert, dass der Hologrammfilm staubfrei ist. Aus diesem Grund ist es von Vorteil, wenn eine Reinigungseinrichtung vorhanden ist, die ausgebildet ist, den zu belichtenden Filmabschnitt des Hologrammfilms, insbesondere schon während dessen Transports, mit ionisierter Luft auf seiner dem Master zugewandten Seite zu besprühen. Dies dient auch der statischen Entladung des Films.

Diese ionisierte Luft kann ebenfalls zur Bereitstellung eines Luftpolsters während des Transports genutzt werden, wozu die Reinigungseinrichtung insbesondere eine zumindest teilweise, vorzugsweise aber überwiegend in einer Filmtransportrichtung orientierte erste Sprühdüse für ionisierte Luft umfasst und wobei die Reinigungseinrichtung eine zumindest teilweise, vorzugsweise überwiegend entgegen der Filmtransportrichtung orientierte zweite Sprühdüse für ionisierte Luft umfasst.

Für einen kompakten, symmetrischen Aufbau des Belichtungstisches ist es dabei vorteilhaft, wenn die erste Sprühdüse filmaufwärts bezüglich der Halteeinrichtung angeordnet ist, und wenn die zweite Sprühdüse filmabwärts bezüglich der Halteeinrichtung angeordnet ist.

Die für den Belichtungstisch und die Belichtungsmaschine genannten Vorteile und vorteilhaften Ausgestaltungen gelten gleichermaßen für das erfindungsgemäße Verfahren. Dieses umfasst insbesondere die folgenden Schritte:
- Transportieren des zu belichtenden Filmabschnitts zu einem in einer Halteeinrichtung aufgenommenen Master mittels einer Filmtransporteinrichtung,
- Fixieren des zu belichtenden Filmabschnitts durch Anlegen eines Unterdrucks an oder um den Master mittels einer Drucklufteinrichtung, und
- Belichten zumindest eines Teils des Filmabschnitts mittels einer Belichtungseinrichtung.

Durch die Fixierung des Filmabschnitts an oder um den Master mit einem Unterdruck ist gewährleistet, dass der Hologrammfilm blasenfrei am Master während der Belichtung angeordnet ist, sodass Volumenreflexionshologramme betriebssicher und insbesondere ausschussarm hergestellt werden.

Um den Hologrammfilm während des Transportes mittels der Filmtransporteinrichtung vor Beschädigungen, beispielsweise durch Kanten des Masters oder der Halteeinrichtung für den Master, zu schützen, hat es sich als vorteilhaft erwiesen, wenn die Drucklufteinrichtung während des Transports des Hologrammfilms einen Überdruck derart bereitstellt, dass der Hologrammfilm auf einem Luftpolster während des Transports gleitet.

Wird ein zu starker Unterdruck am Filmabschnitt durch die Druckeinrichtung angelegt, kann es dazu führen, dass Eigenbewegungen, beispielsweise in Form von Newton-Ringen, auftreten, sodass es sich als sinnvoll erwiesen hat, wenn während des Belichtens ein Unterdruck am Filmabschnitt angelegt wird, der gegenüber dem Unterdruck beim Fixieren des Filmabschnitts reduziert ist, oder wenn während des Belichtens der Filmabschnitt drucklos am Master gehalten wird.

Es ist erfindungsgemäß vorgesehen, dass der Hologrammfilm zum Fixieren des Filmabschnitts derart gegenüber dem Master gehalten wird, dass die Oberfläche des zu belichtenden Filmabschnitts und die Oberfläche des Masters unter einem spitzen Winkel aufeinander zu oder voneinander weg verlaufend orientiert sind, und dass der Filmabschnitt auf den Master ausgehend von dem spitzen Winkel mittels einer Aufstreifeinrichtung aufgestreift wird. Durch die Bildung einer Art "Keil" zwischen dem Hologrammfilm und dem Master lässt sich noch einfacher die dazwischen befindliche Luft oder etwaige Gaseinschlüsse mit der Aufstreifeinrichtung ausstreifen, sodass die Anzahl der Gaseinschlüsse zwischen dem Master und dem Filmabschnitt auf ein Minimum reduziert wird, vorzugsweise null beträgt.

Zur Reduzierung der Taktzeit für die Herstellung mehrerer Volumenhologramme ist erfindungsgemäß vorgesehen, dass der spitze Winkel zwischen dem Filmabschnitt und dem Master alternierend auf der filmabwärts gelegenen Seite des Masters und auf der filmaufwärts gelegenen Seite des Masters angeordnet wird. Zusätzlich wird dabei die Aufstreifeinrichtung dazu korrespondierend betätigt, um den zu belichtenden Filmabschnitt ebenfalls alternierend ausgehend von der filmabwärts gelegenen Seite des Masters und ausgehend von der filmaufwärts gelegenen Seite des Masters darauf aufzustreifen. Zur zusätzlichen Beseitigung von Blasen oder zur Vermeidung von Knisterstellen im Hologrammfilm trägt bei, wenn zeitgleich zum Aufstreifen des Filmabschnitts auf den Master der Unterdruck an oder um den Master bereitgestellt wird.

Um die "Keile" bereitzustellen werden in vorteilhafter Weise Filmhubeinrichtungen verwendet.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine schematische Darstellung einer Belichtungsmaschine zur Belichtung eines Volumenreflexionshologramms in einem Hologrammfilm,
- Figur 2: eine Draufsicht auf einen Belichtungstisch,
- Figur 3: eine perspektivische, entlang der Linie V - V aus Figur 2 geschnittene Darstellung des Belichtungstisches,
- Figur 4: den Schnitt entlang der Linie IV - IV aus Figur 2,
- Figur 5a: eine Seitenansicht entlang der Linie V - V aus Figur 2 mit sich am ersten Anschlag befindender Anpressrolle vor einem Aufstreifen des Hologrammfilms auf den Master,
- Figur 5b: eine Seitenansicht entlang der Linie V - V aus Figur 2 mit sich am zweiten Anschlag befindender Anpressrolle und den Filmhubeinrichtungen in der Belichtungskonfiguration, und
- Figur 5c: eine Seitenansicht entlang der Linie V - V aus Figur 2 mit sich am zweiten Anschlag befindender Anpressrolle vor einem erneuten Aufstreifen des Hologrammfilms auf den Master.

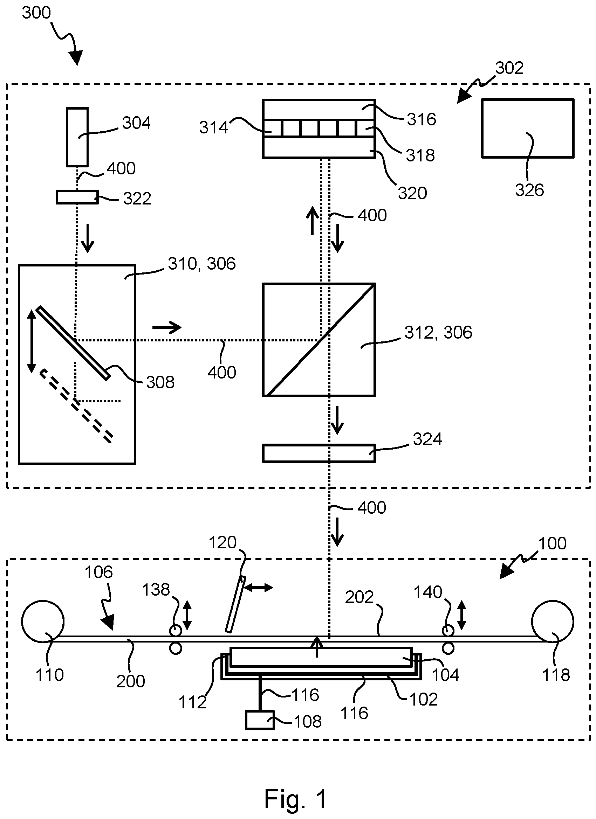

**In** Figur 1 ist schematisch eine Hologrammbelichtungsmaschine 300 zum Belichten von Hologrammen in einem Hologrammfilm 200 gezeigt. Eine solche Hologrammbelichtungsmaschine 300 wird auch als Holobelichter bezeichnet.

Die Hologrammbelichtungsmaschine 300 umfasst eine in der Zeichnung oben dargestellte Belichtungseinrichtung 302 und einen in der Zeichnung unten dargestellten Belichtungstisch 100.

Die Belichtung von Hologrammen erfolgt mittels kohärenten Lichts. Hierfür weist die Belichtungeinrichtung 302 eine Lichtquelle 304 auf, welche vorliegend als ein cw-Laser ausgebildet ist. Vorliegend steht "cw" für "continuous wave" und bedeutet "zeitlich konstant abgestrahlte Welle". Es ist die Möglichkeit gegeben, dass es sich bei der Lichtquelle 304 um einen gepulsten Laser handelt. Das Licht 400 der als Laser ausgebildeten Lichtquelle 304 weist einen ersten Polarisationszustand auf. Zum Führen des Lichts 400 wird eine Strahlführungsoptik 306 verwendet. Das Licht der Lichtquelle 304 wird bei der dargestellten Belichtungseinrichtung 302 zunächst, ggfs. unter Zuhilfenahme einer Strahlformungseinrichtung 322 zur insbesondere in einer Raumrichtung orientierten Strahlaufweitung, auf eine Ablenk- und Scanvorrichtung 310 der Strahlführungsoptik 306 geführt. Diese Ablenk- und Scanvorrichtung 310 umfasst einen Galvanometerscanner und einen mit dem Galvanometerscanner gekoppelten Spiegel 308, an dem das einfallende Licht 400 umgelenkt wird. In einer ersten Stellung ist der Spiegel 308 mittels einer durchgezogenen Linie dargestellt, wobei er in einer zweiten Stellung strichliert gezeigt ist. Durch das Verschieben des Spiegels 308 kann eine einem "Scan", insbesondere einem Linienscan entsprechende Belichtung des Hologramms erfolgen. In anderen Worten wird der Hologrammfilm 200 zur Belichtung des Hologramms "abgetastet". Anders geartete Ablenk- und Scanvorrichtungen 310 für das Licht 400 sind ebenfalls einsetzbar.

Das abgelenkte Licht 400 wird auf einen polarisationsabhängigen Strahlteilerwürfel 312 der Strahlführungsoptik 306 geführt. Dieser ist aus einem ersten Prisma und einem zweiten Prisma gebildet, an deren Grenzfläche eine polarisationsabhängige Strahlteilung erfolgt. Anstelle von Prismen kann auch eine Strahlteilerplatte Einsatz finden. Licht 400 des ersten Polarisationszustands wird an dieser Grenzfläche abgelenkt. Licht eines weiteren, zu dem ersten Polarisationszustand orthogonalen Polarisationszustands kann hingegen durch die Grenzfläche hindurchtreten.

Das an der Grenzfläche des polarisationsabhängigen Strahlteilerwürfels 312 abgelenkte Licht 400 wird auf einen räumlichen Lichtmodulator 314 gelenkt, der als sogenannter Liquid-Crystal-on-Silicon-Lichtmodulator (LCoS) ausgebildet ist. Der Lichtmodulator 314 umfasst eine Siliziumschicht 316, an der auftreffendes Licht 400 reflektiert wird. Auf dieser Siliziumschicht 316 sind vorliegend elektronische Schaltelemente ausgebildet, die zum Schalten von Flüssigkristallzellen 318 verwendet werden, die vor der zur Reflexion genutzten Oberfläche der Siliziumschicht 316 angeordnet sind. Die einzelnen Flüssigkristallzellen 318 können individuell in unterschiedliche Schaltzustände versetzt werden. Typischerweise liegt ein Array an Flüssigkristallzellen 318 vor, so dass aus der Papierebene heraus oder in diese hinein versetzt weitere Reihen an Flüssigkristallzellen 318 vorliegen. Abhängig von dem jeweiligen Schaltzustand der Flüssigkristallzellen 318 wird ein Polarisationszustand des durchtretenden Lichts 400 geändert oder nicht geändert, wodurch das Licht 400 räumlich moduliert wird. Vereinfachend wird hier angenommen, dass in einem ersten Schaltzustand das in einem ersten Polarisationszustand auf den Lichtmodulator 314 auftreffende Licht 400 beim Durchtritt durch eine Flüssigkristallzelle 318, welche aufgrund der Reflexion an der Oberfläche der Siliziumschicht 316 zweimal durchlaufen wird, insgesamt hinsichtlich der Polarisation so verändert wird, dass das Licht 400 anschließend in dem zu dem ersten Polarisationszustand orthogonalen weiteren Polarisationszustand polarisiert ist. Dieses hinsichtlich der Polarisation modulierte Licht 400 tritt durch eine transparente Schutzscheibe 320 des räumlichen Lichtmodulators 314, wobei insbesondere eine Austrittsfläche der Schutzscheibe 320 parallel zu der Reflexionsoberfläche der Siliziumschicht 316 orientiert ist. Die Oberflächennormale des Lichtmodulators 314 ist somit orthogonal sowohl zu der Austrittsfläche der Schutzscheibe 320 als auch zu der reflektierenden Oberfläche der Siliziumschicht 316.

Das modulierte Licht trifft nach dem Austreten aus dem Lichtmodulator 314 erneut auf dem polarisationsabhängigen Strahlteiler 312 auf, wobei das vom LCoS zurückreflektierte modulierte Licht 400 abhängig von seinem Polarisationszustand die Grenzfläche des Strahlteilers 312 passieren kann oder nicht. Ist das modulierte Licht 400, wie im exemplarisch dargestellten Fall, aufgrund des ersten Schaltzustands der Flüssigkristallzelle in den zu dem ersten Polarisationszustand orthogonalen weiteren Polarisationszustand überführt worden, so kann dieses die Grenzfläche des polarisationsabhängigen Strahlteilerwürfels 312 passieren, womit es, ggfs. unter Zuhilfenahme eines Polarisationsfilters 324, weiter in Richtung des Belichtungstisches 100 geleitet wird. Anteile des Lichts 400, die sich nach wie vor in dem ersten Polarisationszustand befinden und an dem polarisationsabhängigen Strahlteilerwürfel 312 ankommen, werden an dessen Grenzfläche abgelenkt und gelangen daher nicht weiter in Richtung des sich unter der Belichtungseinrichtung 302 befindlichen Belichtungstisches 100. Durch den polarisationsabhängigen Strahlteilerwürfel 312 wird somit das Licht 400 abhängig von dem aufmodulierten Polarisationszustand räumlich hinsichtlich der Intensität moduliert.

Bei der Beschreibung der Belichtungseinrichtung 302 wurde bis hierher davon ausgegangen, dass der räumliche Lichtmodulator 314 den Polarisationszustand des Lichts um 90 Grad dreht oder unverändert lässt. Es sind jedoch auch Änderungen möglich, die eine Drehung der Polarisationsrichtung zwischen 0 Grad und 90 Grad bewirken. Alle diese Drehungen führen dazu, dass das Licht eine veränderte Amplitude und damit veränderte Intensität des weiteren Polarisationszustands aufweist. Je nach Drehwinkel variieren diese und nehmen mit dem Betrag der Drehung zwischen 0 Grad und 90 Grad zu. Hierdurch ist es möglich "Graustufen" zu belichten.

Der Belichtungstisch 100 weist eine Halteeinrichtung 102 auf, in welcher ein Master 104 aufgenommen ist. Der Master 104 umfasst einen Träger, welcher in der Regel aus Glas oder einem anderen Werkstoff gebildet ist. Auch andere Trägermaterialien sind möglich, beispielsweise Metalle. Auf den Träger ist vorzugsweise mindestens eine optisch aktive Schicht, beispielsweise eine Beugungsschicht, aufgebracht, welche eine zu kopierende Beugungsstruktur umfasst. Vorliegend umfasst die Beugungsschicht des Masters 104 ein Volumenreflexionshologramm, welches kopiert werden soll.

Es ist zu erkennen, dass die Belichtungsmaschine 300, insbesondere der Belichtungstisch 100 eine Filmtransporteinrichtung 106 umfasst, die ausgebildet ist, den Hologrammfilm 200 relativ bezüglich der Halteeinrichtung 102 und damit relativ zum Master 104 zu transportieren. Die Filmtransporteinrichtung 106 ist für ein Aufnehmen des holografischen Films und Halten und/oder Führen des Films während der Belichtung des Hologramms vorgesehen. Bei der dargestellten Belichtungsmaschine 300 umfasst die Filmtransporteinrichtung 106 eine Filmrolle 110, auf der der Hologrammfilm 200 bereitgestellt wird. Dieser wird nach dem Belichten auf einer weiteren Filmrolle 118 aufgewickelt. Gegebenenfalls durchläuft der belichtete Hologrammfilm 200 eine Strecke zur Entwicklung des Hologramms, durch welche thermisch auf den Hologrammfilm 200 eingewirkt wird, um das Hologramm im Film zu entwickeln, bevor der belichtete Hologrammfilm 200 auf der weiteren Filmrolle 118 wieder aufgewickelt wird. Der Hologrammfilm 200 wird jedenfalls in typischer Weise mittels Filmführungsrollen geführt. Es ist zu erkennen, dass sich der Hologrammfilm 200 über den Bereich des Masters 104 hinweg erstreckt, womit die Filmtransporteinrichtung 106 in anderen Worten also ausgebildet ist, einen zu belichtenden Filmabschnitt 202 relativ bezüglich des Masters 104 zu positionieren. In diesen Filmabschnitt 202 wird das Volumenreflexionshologramm belichtet, mithin einkopiert. Um eine betriebssichere Belichtung des Hologramms zu erzielen, liegt der Hologrammfilm 200 während des Belichtungsvorgangs an dem Master 104 an. Durch diese Anlage lassen sich Eigenbewegungen des holografischen Films unterdrücken, was die erzielbare Beugungseffizienz des hergestellten Hologramms steigert.

Bei der Belichtung tritt das modulierte Licht 400, welches den weiteren Polarisationszustand aufweist, durch den zu belichtenden Filmabschnitt 202 des Hologrammfilms 200 hindurch und wird an der optisch aktiven Struktur der mindestens einen optisch aktiven Schicht des Masters 104 zurückgelenkt, z.B. bei einer als Beugungsschicht ausgebildeten optisch aktiven Schicht gebeugt. Das zurückgestrahlte Licht (nicht dargestellt) interferiert dann in dem Hologrammfilm 200 mit dem von dem Lichtmodulator 314 kommenden modulierten Licht 400. Hierdurch wird die optisch aktive Struktur, z.B. die beugende Struktur, des Masters 104 in den Hologrammfilm 200 einbelichtet. Hierbei wird die optisch aktive Struktur pixelweise abhängig von der räumlichen Modulation entweder belichtet und kopiert oder andererseits nicht belichtet und somit auch nicht kopiert. Es entsteht somit eine Kopie der optisch aktiven Struktur, beispielsweise eine Kopie eines Volumenreflexionshologramms einer Mattscheibe.

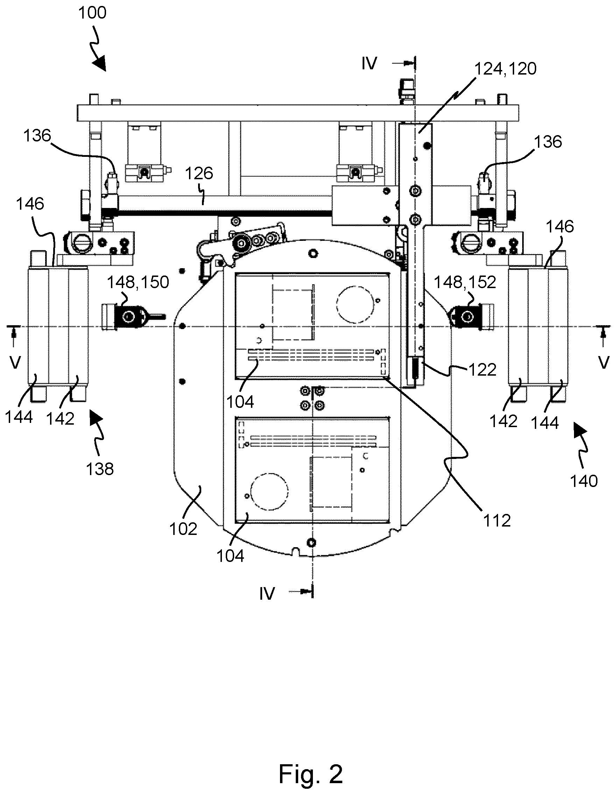

Die vorliegende Erfindung betrifft die Gestaltung und die Betriebsweise des Belichtungstisches 100, der in Figur 2 in einer Draufsicht näher zu erkennen ist. Die hierbei gezeigte Halteeinrichtung 102 ist nach Art eines Drehtellers gestaltet und weist zwei Aufnahmen für einen Master 104 auf. Eine andere Anzahl an Masteraufnahmen ist möglich, sodass auch drei oder mehr Master 104 auf ein- und derselben Halteeinrichtung 102 angeordnet werden können. Um die sehr empfindlichen Kanten des Masters 104 zu schützen, ist die Aufnahme der Halteeinrichtung 102 derart ausgestaltet, dass der Master 104 gegenüber der Halteeinrichtung 102 versenkt angeordnet ist vorzugsweise aber mit letzterer in einer gemeinsamen Ebene liegt.

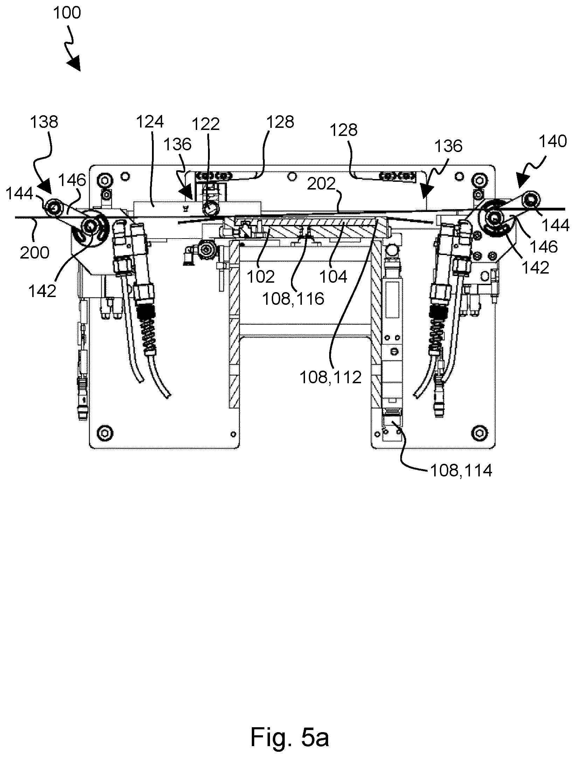

Die Filmtransporteinrichtung 106 umfasst eine filmaufwärts des Masters 104 gelegene erste Filmhubeinrichtung 138 und eine filmabwärts des Masters 104 gelegene zweite Filmhubeinrichtung 140, die jeweils eine Filmhubwalze 142 und eine Führungswalze 144 bestehen. Die Filmhubwalze 142 ist achsparallel zur Führungswalze 144 angeordnet, wobei die Führungswalze 144 selbst an einem begrenzt um die Achse der Filmhubwalze 142 verschwenkbaren Hebelarm 146 drehbar gelagert ist. Hierzu weist die betreffende Filmhubeinrichtung 138, 140 entsprechende bogenförmige Langlöcher auf (Fig. 5a bis 5c). Die Verstellung des Hebelarms 146 kann dabei druckmittelbetätigt, insbesondere pneumatisch erfolgen. Auch das Heben und Senken der Filmhubeinrichtungen 138, 140 erfolgt druckmittelbetätigt, insbesondere pneumatisch. Die Filmhubeinrichtungen 138, 140 der Filmtransporteinrichtung 106 gewährleisten während des Transports einen minimalen Abstand zwischen der Halteeinrichtung 102 und dem Hologrammfilm 200, sodass dieser keine Beschädigungen erfährt. Dieser Abstand kann beispielsweise zwischen 0,4 Millimeter und 1,1 Millimeter betragen, wodurch der Belichtungstisch 100 und damit die mit diesem gebildete Belichtungsmaschine 300 sehr platzsparend und kompakt gestaltet sind.

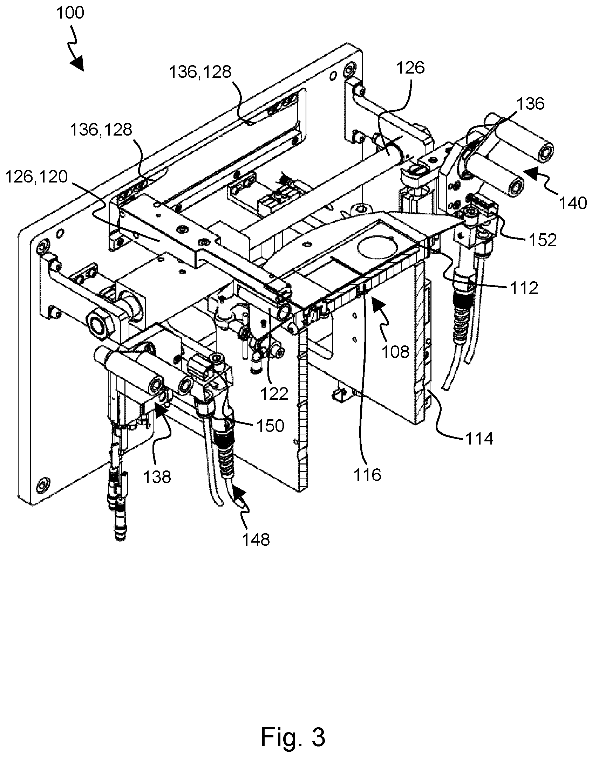

Ausweislich Figur 3 ist der Halteeinrichtung 102 vorliegend eine Drucklufteinrichtung 108 zugeordnet, die ausgebildet ist, für die Belichtung des Filmabschnitts 202 diesen mittels eines Unterdrucks an dem in der Halteeinrichtung 102 aufgenommenen Master 104 zumindest zeitweise zu fixieren. Hierzu ist vorliegend ein um den Master 104 umfangsseitig angeordneter Schlitz vorhanden, der somit eine Gasdurchtrittsanordnung 112 bildet. Die Gasdurchtrittsanordnung 112 rahmt also den Master 104 umfangsseitig und gewährleistet damit ein blasenfreies Anliegen des zu belichtenden Filmabschnitts 202 am Master 104. Vorliegend kann die Drucklufteinrichtung 108 aber zusätzlich dazu genutzt werden, um zeitweise einen Überdruck derart bereitzustellen, dass der Transport des Hologrammfilms 200 relativ bezüglich des Masters 104 von einem Luftpolster gestützt erfolgt, was Beschädigungen des Hologrammfilms 200 zusätzlich vorbeugt. **In** den Figuren ist zu erkennen, dass zur Erzeugung des erforderlichen Unterdrucks oder Vakuums die Drucklufteinrichtung 108 vorliegend eine pneumatische Venturisaugdüse 114 umfasst, die mit der Gasdurchtrittsanordnung 112 über einen oder mehrere Kanäle 116 strömungsmechanisch verbunden und in geeigneter Weise mit Ventilen verschaltet ist.

Um Gaseinschlüsse zwischen dem Hologrammfilm 200 und dem Master 104 zusätzlich herausdrücken zu können, ist vorliegend außerdem eine Aufstreifeinrichtung 120 vorhanden um den zu belichtenden Filmabschnitt 202 auf den Master 104 aufzustreifen. Diese Aufstreifeinrichtung 120 ist vorliegend durch einen zwischen zwei Anschlägen 136 verschiebbaren Schlitten 124 gebildet, an dem eine auf einer Drehachse drehbar gelagerte und beim Aufstreifen mit dem Filmabschnitt 202 wechselwirkende Anpressrolle 122 gelagert ist. Der Schlitten 124 selbst ist vorliegend um eine senkrecht bezüglich der Drehachse der Anpressrolle 122 orientierte Verfahrachse 126 begrenzt verschwenkbar gelagert, wodurch sich die Anpressrolle 122 selbst zwischen einer angehobenen Stellung und einer abgesenkten Stellung verstellen lässt. An den Anschlägen 136 oder anschlagsnah ist jeweils eine Steuerkurve 128 vorhanden, die ausgebildet ist, die Anpressrolle 122 zwischen der angehobenen Stellung und der abgesenkten Stellung zu verstellen, wenn der Schlitten 124 mit den Steuerkurven 128 wechselwirkt.

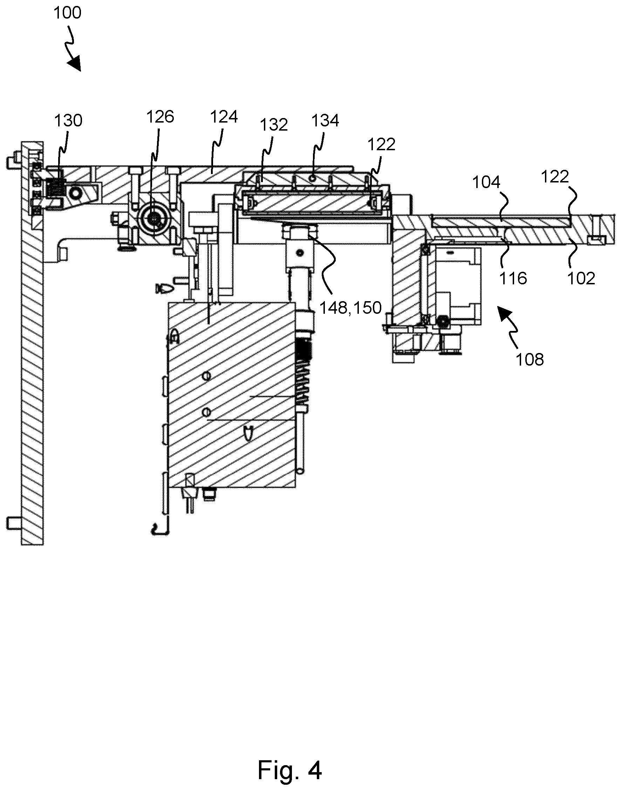

Ausweislich Figur 4 ist zu erkennen, dass dem Schlitten 124 auf seiner dem Master 104 abgewandten Seite eine Federanordnung 130 zugeordnet ist, die den Anpressdruck der Anpressrolle 122 auf den Master 104 oder auf den sich am Master 104 befindenden Filmabschnitt 202 einstellt oder vorgibt. Diese Federanordnung 130 übt eine Federkraft auf den um die Verfahrachse 126 verschwenkbaren Schlitten 124 aus, sodass die Anpresskraft der Anpressrolle 122 im Bereich zwischen den beiden Anschlägen 136 maximal ist. Durch die Anschläge 136 und/oder die Steuerkurven 128 wird die Federanordnung 130 aber zumindest teilweise, vorzugsweise gänzlich, außer Kraft gesetzt, womit die Anpressrolle 122 vom Hologrammfilm 200 abgehoben werden kann, wenn sich der Schlitten 124 in seinen Endlagen befindet. Der Schlitten 124 wird vorliegend zwischen den beiden Anschlägen 136 ebenfalls druckmittelbetätigt, insbesondere pneumatisch verstellt. Eine hydraulische oder motorische Verstellung ist ebenfalls möglich.

Es ist zusätzlich zu erkennen, dass dem Schlitten 124 ein Haltearm 132 zugeordnet ist, an welchem die Anpressrolle 122 drehbar gelagert ist. Dieser Haltearm 132 weist eine senkrecht zur Drehachse der Anpressrolle 122 orientierte Schwenkachse 134 auf, sodass der Haltearm 132 derart an dem Schlitten 124 fixiert ist, dass der Haltearm 132 und damit die Anpressrolle 122 begrenzt verschwenkbar gegenüber dem Schlitten 124 gelagert sind, um dadurch eine Ausgleichsbewegung ausführen zu können, die durch Toleranzschwankungen oder durch etwaige Unebenheiten erzeugt werden.

Um den Hologrammfilm 200 vor dem Belichten möglichst staubfrei zu halten und diesen damit vor Kratzern zu schützen, ist vorliegend eine Reinigungseinrichtung 148 vorhanden. Die Reinigungseinrichtung 148 umfasst vorliegend eine in der Filmtransportrichtung orientierte und filmaufwärts des Masters 104 angeordnete erste Sprühdüse 150 für ionisierte Luft sowie eine entgegen der Filmtransportrichtung orientierte filmabwärts des Masters 104 angeordnete zweite Sprühdüse 152 für ionisierte Luft. Mit dieser ionisierten Luft kann zusätzlich zur Reinigungsfunktion das Luftpolster während des Transports zwischen dem Hologrammfilm 200 und der Halteeinrichtung 102 aufrechterhalten oder unterstützt werden, sodass der Reinigungseinrichtung 148 eine Doppelfunktion zukommt.

Anhand der Figuren 5a bis 5c wird nachstehend erläutert, wie eine Mehrzahl von Filmabschnitten 202 am Master 104 des Belichtungstisches 100 fixiert und belichtet wird.

Zunächst wird der zu belichtende Filmabschnitt 202 zu dem in der Halteeinrichtung 102 aufgenommenen Master 104 mittels der Filmtransporteinrichtung 106 transportiert, wobei sich die filmabwärts des Masters 104 gelegene zweite Filmhubeinrichtung 140 in einer angehobenen, der Transportkonfiguration entsprechenden Stellung befindet. Zeitgleich oder anschließend wird die erste Filmhubeinrichtung 138 der Filmtransporteinrichtung 106 in eine abgesenkte, einer Belichtungskonfiguration entsprechenden Stellung verstellt, sodass der Hologrammfilm 200 gegenüber dem Master 104 derart gehalten wird, dass die Oberfläche des zu belichtenden Filmabschnitts 202 und die Oberfläche des Masters 104 unter einem spitzen Winkel aufeinander zu oder voneinander weg verlaufend orientiert sind. Nun wird mittels der Anpressrolle 122 der Aufstreifeinrichtung 120 der Filmabschnitt 202 auf den Master 104 ausgehend von dem spitzen Winkel auf den Master 104 aufgestreift, wobei zusätzlich eine Saugluft, also ein Unterdruck an oder um den Master 104 mittels der Drucklufteinrichtung 108 vorliegt.

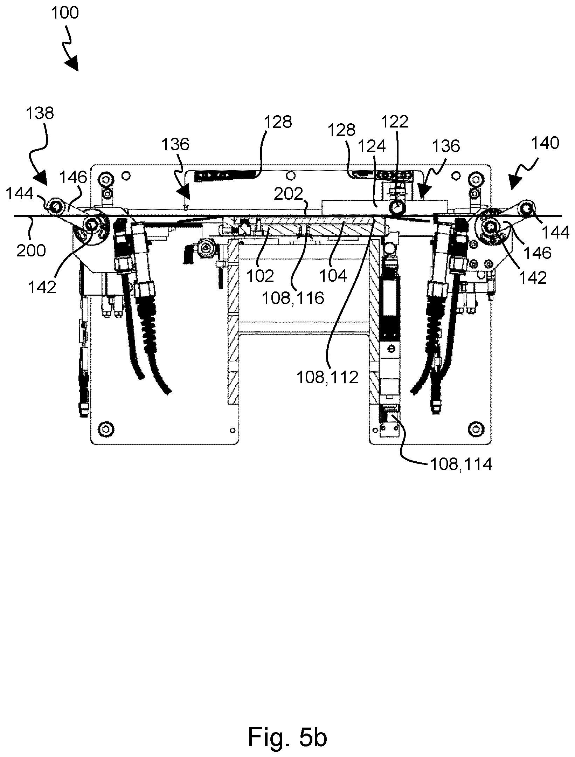

In Figur 5a wird dabei also die Anpressrolle 122 aus ihrer linken Stellung in die in Figur 5b gezeigte rechte Stellung verfahren. Zeitgleich oder anschließend wird auch die zweite Filmhubeinrichtung 140 in die abgesenkte Stellung überführt, sodass dann eine Belichtung des Filmabschnitts 202 erfolgen kann. In vorteilhafter Weise und zur Vermeidung von unerwünschten Effekten beispielsweise durch Newton-Ringe, wird dann die Saugluft reduziert oder der Unterdruck auf ein niedrigeres Maß eingestellt, wobei in einer vorteilhaften Ausgestaltung der Filmabschnitt 202 drucklos am Master 104 gelagert ist. Anschließend wird der Filmabschnitt 202 durch Beleuchten mit dem modulierten Licht 400 belichtet, wodurch das Volumenreflexionshologramm in den Filmabschnitt 202 kopiert wird.

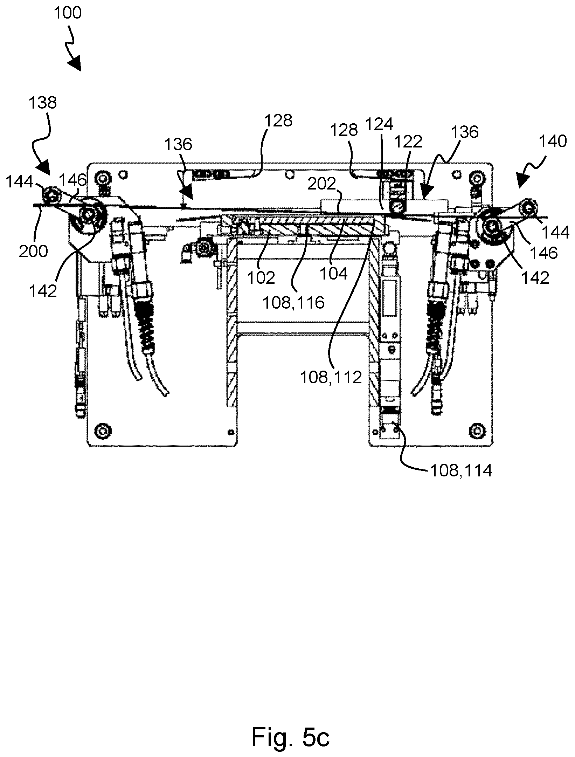

Anschließend wird der Hologrammfilm 200 mittels der Filmtransporteinrichtung 106 weitertransportiert und ein neuer Filmabschnitt gegenüber dem Master 104 positioniert. Dabei wird dann ausweislich Figur 5c nun die erste Filmhubeinrichtung 138 in ihre angehobene Stellung überführt, wobei die zweite Filmhubeinrichtung 140 in der abgesenkten Stellung verbleibt. Nun ist der spitze Winkel, der durch die Oberfläche des zu belichtenden Filmabschnitt 202 und die Oberfläche des Masters 104 gebildet ist, filmab des Masters 104 angeordnet, sodass jetzt die Anpressrolle 122 den neuen Filmabschnitt 202 in der Zeichnung von rechts nach links auf den Master 104 aufstreifen kann, wobei dabei in vorteilhafter Weise zusätzlich wieder ein Unterdruck durch die Drucklufteinrichtung 108 an oder um den Master 104 bereitgestellt ist. Somit hat es sich also als sinnvoll und vorteilhaft erwiesen, dass zum Belichten mehrerer Filmabschnitte 202 des Hologrammfilms 200 der spitze Winkel alternierend auf der filmabwärts gelegenen Seite des Masters 104 und auf der filmaufwärts gelegenen Seite des Masters 104 angeordnet wird, und dass die Aufstreifeinrichtung 120 mit ihrer Anpressrolle 122 den zu belichtenden Filmabschnitt 202 dazu korrespondierend, ebenfalls alternierend ausgehend von der filmabwärtsgelegenen Seite des Masters 104 und ausgehend von der filmaufwärts gelegenen Seite des Masters 104 aufstreift. Dies reduziert außerdem die Taktzeit bei einer Herstellung einer Mehrzahl von zu belichtenden Filmabschnitten 202.

Für die Steuerung der einzelnen Konstituenten der Belichtungsmaschine 300 ist außerdem eine Steuerungseinrichtung 326 vorhanden (Fig. 1). Die Steuerungseinrichtung 326 ist dabei in vorteilhafter Weise ausgebildet, die Lichtquelle 304 und/oder die Ablenk- und Scaneinrichtung 310 und/oder den Lichtmodulator 314 und/oder die Filmtransporteinrichtung 106 und/oder die Drucklufteinrichtung 108 und/oder die Aufstreifeinrichtung 120 und/oder die Reinigungseinrichtung 148 zu steuern.

### BEZUGSZEICHENLISTE

- 100: Belichtungstisch
- 102: Halteeinrichtung
- 104: Master
- 106: Filmtransporteinrichtung
- 108: Drucklufteinrichtung (Saugeinrichtung und/oder Blaseinrichtung)
- 110: Filmrolle (unbelichteter Holofilm)
- 112: Gasdurchtrittsanordnung
- 114: Venturisaugdüse
- 116: Kanal (Druckluft/Saugluft)
- 118: weitere Filmrolle (belichteter Holofilm)
- 120: Aufstreifeinrichtung
- 122: Anpressrolle
- 124: Schlitten
- 126: Verfahrachse (Schlitten)
- 128: Steuerkurve
- 130: Federanordnung
- 132: Haltearm
- 134: Schwenkachse
- 136: Anschlag
- 138: erste Filmhubeinrichtung
- 140: zweite Filmhubeinrichtung
- 142: Filmhubwalze
- 144: Führungswalze
- 146: Hebelarm
- 148: Reinigungseinrichtung
- 150: erste Sprühdüse
- 152: zweite Sprühdüse
- 200: Hologrammfilm
- 202: Filmabschnitt (zu belichtender Filmabschnitt)
- 300: Hologrammbelichtungsmaschine
- 302: Belichtungseinrichtung
- 304: Lichtquelle (z.B. Laser)
- 306: Strahlführungsoptik
- 308: Spiegel
- 310: Ablenk- und Scaneinrichtung
- 312: Strahlteiler
- 314: Lichtmodulator
- 316: Siliziumschicht
- 318: Flüssigkristallzelle
- 320: Schutzscheibe
- 322: Strahlformungseinrichtung (z.B. Powell- oder Zylinderlinse)
- 324: Polarisationsfilter
- 326: Steuerungseinrichtung

## Patentansprüche

1. Belichtungstisch (100) für eine Hologrammbelichtungsmaschine (300),
mit einer Halteeinrichtung (102), in welcher ein Master (104) aufgenommen ist,
und mit einer Filmtransporteinrichtung (106), die ausgebildet ist, einen Hologrammfilm (200) relativ bezüglich der Halteeinrichtung (102) zu transportieren und einen zu belichtenden Filmabschnitt (202) relativ bezüglich des Masters (104) für eine Hologrammbelichtung zu positionieren,
wobei
der Halteeinrichtung (102) eine Drucklufteinrichtung (108) zugeordnet ist, die ausgebildet ist, den Filmabschnitt (202) mittels eines Unterdrucks an dem in der Halteeinrichtung (102) aufgenommenen Master (104) zumindest zeitweise zu fixieren,
**dadurch gekennzeichnet,**
**dass** die Filmtransporteinrichtung (106) eine erste Filmhubeinrichtung (138) umfasst, die auf der filmaufwärts gelegen Seite des Masters (104) angeordnet ist, und die zwischen einer angehobenen, einer Transportkonfiguration entsprechenden Stellung und einer abgesenkten, einer Belichtungskonfiguration entsprechenden Stellung verstellbar ist,
und **dass** die Filmtransporteinrichtung (106) eine zweite Filmhubeinrichtung (140) umfasst, die auf der filmabwärts gelegenen Seite des Masters (104) angeordnet ist, und die zwischen einer angehobenen, einer Transportkonfiguration entsprechenden Stellung und einer abgesenkten, einer Belichtungskonfiguration entsprechenden Stellung verstellbar ist.

2. Belichtungstisch (100) nach Anspruch 1, **dadurch gekennzeichnet, dass** die Drucklufteinrichtung (108) ausgebildet ist, zumindest zeitweise einen Überdruck derart bereitzustellen, dass der Transport des Hologrammfilms (200) relativ bezüglich des Masters (104) von einem Luftpolster gestützt erfolgt.

3. Belichtungstisch (100) nach Anspruch 1 oder 2, **dadurch gekennzeichnet, dass** die Drucklufteinrichtung (108) mindestens eine Gasdurchtrittsanordnung (112) umfasst, die randseitig bezüglich des in der Halteeinrichtung (102) aufgenommenen Masters (104) angeordnet ist und/oder die in dem Master (104) selbst ausgebildet ist, dass die Gasdurchtrittsanordnung (112) den Master (104) umfangsseitig rahmt, und dass die Gasdurchtrittsanordnung (112) durch einen Schlitz oder durch eine mehrere Bohrungen umfassende Bohrungsanordnung gebildet ist.

4. Belichtungstisch (100) nach einem der Ansprüche 1 bis 3, **dadurch gekennzeichnet, dass** eine Aufstreifeinrichtung (120) vorhanden ist, um den zu belichtenden Filmabschnitt (202) auf den Master (104) aufzustreifen, und dass die Aufstreifeinrichtung (120) einen zwischen zwei Anschlägen (136) verschiebbaren Schlitten (124) umfasst, an welchem eine auf einer Drehachse drehbar gelagerte und mit dem Filmabschnitt (202) wechselwirkende Anpressrolle (122) gelagert ist.

5. Belichtungstisch (100) nach Anspruch 4, **dadurch gekennzeichnet,**
**dass** der Schlitten (124) um eine senkrecht bezüglich der Drehachse der Anpressrolle (122) orientierte Verfahrachse (126) begrenzt verschwenkbar gelagert und damit die Anpressrolle (122) zwischen einer angehobenen Stellung und einer abgesenkten Stellung verstellbar ist,
und **dass** jeweils eine Steuerkurve (128) vorhanden ist, die ausgebildet ist, die Anpressrolle (122) zwischen der angehobenen Stellung und der abgesenkten Stellung zu verstellen.

6. Belichtungstisch (100) nach Anspruch 4 oder 5, **dadurch gekennzeichnet, dass** dem Schlitten (124) auf seiner dem Master (104) abgewandten Seite eine Federanordnung (130) zugeordnet ist, die den Anpressdruck der Anpressrolle (122) auf den Master (104) oder auf den sich am Master (104) befindenden Filmabschnitt (202) einstellt oder vorgibt.

7. Belichtungstisch (100) nach einem der Ansprüche 4 bis 6, **dadurch gekennzeichnet, dass** die Anpressrolle (122) an einem Haltearm (132) drehbar gelagert ist, der mittels einer, senkrecht zur Drehachse orientierte Schwenkachse (134) derart an dem Schlitten (124) fixiert ist, dass der Haltearm (132) und damit die Anpressrolle (122) begrenzt verschwenkbar gegenüber dem Schlitten (124) gelagert sind.

8. Belichtungstisch (100) nach einem der Ansprüche 1 bis 7, **dadurch gekennzeichnet, dass** die erste Filmhubeinrichtung (138) und/oder die zweite Filmhubeinrichtung (140) eine um eine Achse drehbare Filmhubwalze (142) umfasst.

9. Belichtungstisch (100) nach Anspruch 8, **dadurch gekennzeichnet, dass** die erste Filmhubeinrichtung (138) und/oder die zweite Filmhubeinrichtung (140) eine zur Filmhubwalze (142) achsparallel angeordnete Führungswalze (144) umfasst, die an einem begrenzt um die Achse verschwenkbaren Hebelarm (146) drehbar gelagert ist.

10. Verfahren zum Einbringen eines Volumenhologramms in einen Filmabschnitt (202) eines Hologrammfilms (200), umfassend die Schritte:
- Transportieren des zu belichtenden Filmabschnitts (202) zu einem in einer Halteeinrichtung (102) aufgenommenen Master (104) mittels einer Filmtransporteinrichtung (106),
- Fixieren des zu belichtenden Filmabschnitts (202) durch Anlegen eines Unterdrucks an oder um den Master (104) mittels einer Drucklufteinrichtung (108), und
- Belichten zumindest eines Teils des Filmabschnitts mittels einer Belichtungseinrichtung (302),
wobei der Hologrammfilm (200) zum Fixieren des Filmabschnitts (202) derart gegenüber dem Master (104) gehalten wird, dass die Oberfläche des zu belichtenden Filmabschnitts (202) und die Oberfläche des Masters (104) unter einem spitzen Winkel aufeinander zu oder voneinander weg verlaufend orientiert sind, und wobei der Filmabschnitt (202) auf den Master (104) ausgehend von dem spitzen Winkel mittels einer Aufstreifeinrichtung (120) aufgestreift wird,
und wobei zum Belichten mehrerer Filmabschnitte (202) des Hologrammfilms (200) der spitze Winkel alternierend auf der filmabwärts gelegenen Seite des Masters (104) und auf der filmaufwärts gelegen Seite des Masters (104) angeordnet wird, und dass die Aufstreifeinrichtung (120) den zu belichtenden Filmabschnitt (202) dazu korrespondierend, ebenfalls alternierend ausgehend von der filmabwärts gelegenen Seite des Masters (104) und ausgehend von der filmaufwärts gelegenen Seite des Masters (104) aufstreift.

11. Verfahren nach Anspruch 10, **dadurch gekennzeichnet, dass** die Drucklufteinrichtung (108) während des Transports des Hologrammfilms (200) einen Überdruck derart bereitstellt, dass der Hologrammfilm (200) auf einem Luftpolster gleitet.

## Claims

1. An exposure table (100) for a hologram exposure machine (300),
with a holding device (102) in which a master (104) is accommodated,
and with a film transport device (106) which is designed to transport a hologram film (200) relative to the holding device (102) and position a film section (202) to be exposed relative to the master (104) for hologram exposure,
whereby
a compressed air device (108) is assigned to the holding device (102) which is designed to fix the film section (202) at least temporarily to the master (104) accommodated in the holding device (102) by means of a negative pressure,
**characterized in that**
**in that** the film transport device (106) comprises a first film lifting device (138) which is arranged on the upstream side of the master (104) and which is adjustable between a raised position corresponding to a transport configuration and a lowered position corresponding to an exposure configuration,
and **in that** the film transport device (106) comprises a second film lifting device (140) which is arranged on the side of the master (104) downstream of the film and which is adjustable between a raised position corresponding to a transport configuration and a lowered position corresponding to an exposure configuration.

2. The exposure table (100) according to claim 1, **characterized in that** the compressed air device (108) is designed to provide an overpressure at least temporarily in such a way that the transport of the hologram film (200) relative to the master (104) is supported by an air cushion.

3. The exposure table (100) according to claim 1 or 2, **characterized in that** the compressed air device (108) comprises at least one gas passage arrangement (112) which is arranged at the edge with respect to the master (104) received in the holding device (102) and/or which is formed in the master (104) itself, **in that** the gas passage arrangement (112) frames the master (104) on the circumferential side, and **in that** the gas passage arrangement (112) is formed by a slot or by a bore arrangement comprising a plurality of bores.

4. The exposure table (100) according to any one of claims 1 to 3, **characterized in that** a roller device (120) is provided in order to roll the film section (202) to be exposed onto the master (104), and **in that** the roller device (120) comprises a carriage (124) which can be displaced between two stops (136) and on which a pressure roller (122), which is rotatably mounted on an axis of rotation and interacts with the film section (202), is mounted.

5. The exposure table (100) according to claim 4, **characterized in that**
**in that** the carriage (124) is mounted so as to be pivotable to a limited extent about a traversing axis (126) oriented perpendicularly with respect to the axis of rotation of the pressure roller (122), and the pressure roller (122) can thus be adjusted between a raised position and a lowered position,
and **in that** a control cam (128) is provided in each case, which is designed to adjust the pressure roller (122) between the raised position and the lowered position.

6. The exposure table (100) according to claim 4 or 5, **characterized in that** a spring arrangement (130) is assigned to the carriage (124) on its side facing away from the master (104), which adjusts or predetermines the contact pressure of the contact pressure roller (122) on the master (104) or on the film section (202) located on the master (104).

7. The exposure table (100) according to any one of claims 4 to 6, **characterized in that** the pressure roller (122) is rotatably mounted on a holding arm (132) , which is fixed to the carriage (124) by means of a pivot axis (134) oriented perpendicular to the axis of rotation in such a way that the holding arm (132) and thus the pressure roller (122) are mounted so as to be pivotable to a limited extent with respect to the carriage (124).

8. The exposure table (100) according to any one of claims 1 to 7, **characterized in that** the first film lifting device (138) and/or the second film lifting device (140) comprises a film lifting roller (142) rotatable about an axis.

9. The exposure table (100) according to claim 8, **characterized in that** the first film lifting device (138) and/or the second film lifting device (140) comprises a guide roller (144) which is arranged axially parallel to the film lifting roller (142) and is mounted rotatably on a lever arm (146) which can pivot about the axis to a limited extent.

10. A method of introducing a volume hologram into a film section (202) of a hologram film (200), comprising the steps of:
- transporting the film section (202) to be exposed to a master (104) accommodated in a holding device (102) by means of a film transport device (106),
- fixing the film section (202) to be exposed by applying a negative pressure to or around the master (104) by means of a compressed air device (108), and
- exposing at least a part of the film section by means of an exposure device (302),
wherein the hologram film (200) is held relative to the master (104) for fixing the film section (202) in such a way that the surface of the film section (202) to be exposed and the surface of the master (104) are oriented at an acute angle towards or away from each other, and wherein the film section (202) is rolled onto the master (104) starting from the acute angle by means of a roller device (120),
and wherein, for exposing a plurality of film sections (202) of the hologram film (200), the acute angle is arranged alternately on the downstream side of the master (104) and on the upstream side of the master (104), and in that the roller device (120) rolls the film section (202) to be exposed in a corresponding manner, likewise alternately starting from the downstream side of the master (104) and starting from the upstream side of the master (104).

11. The method according to claim 10, **characterized in that** the compressed air device (108) provides an overpressure during the transport of the hologram film (200) such that the hologram film (200) slides on an air cushion.

## Revendications

1. Table d'exposition (100) pour une machine d'exposition d'hologramme (300), avec un appareil de retenue (102) dans lequel un maître (104) est reçu, et avec un appareil de transport de film (106) qui est formé afin de transporter un film holographique (200) de manière relative par rapport à l'appareil de retenue (102) et de positionner une section de film (202) à exposer de manière relative par rapport au maître (104) pour une exposition d'hologramme,
dans laquelle
un appareil à air comprimé (108) est associé à l'appareil de retenue (102), appareil à air comprimé qui est formé afin de fixer au moins temporairement la section de film (202) au moyen d'une dépression au maître (104) reçu dans l'appareil de retenue (102),
**caractérisée en ce que**
l'appareil de transport de film (106) comprend un premier appareil de levage de film (138) qui est agencé sur le côté du maître (104) placé en amont du film et qui est déplaçable entre une position levée, correspondant à une configuration de transport et une position abaissée correspondant à une configuration d'exposition,
et **en ce que** l'appareil de transport de film (106) comprend un second appareil de levage de film (140) qui est agencé sur le côté du maître (104) placé en aval du film et qui est déplaçable entre une position levée, correspondant à une configuration de transport et une position abaissée correspondant à une configuration d'exposition.

2. Table d'exposition (100) selon la revendication 1, **caractérisée en ce que** l'appareil à air comprimé (108) est formé afin de fournir au moins temporairement une surpression de telle manière que le transport du film holographique (200) soit effectué de manière relative par rapport au maître (104), soutenu par un coussin d'air.

3. Table d'exposition (100) selon la revendication 1 ou 2, **caractérisée en ce que** l'appareil à air comprimé (108) comprend au moins un ensemble de passage de gaz (112) qui est agencé côté bord par rapport au maître (104) reçu dans l'appareil de retenue (102) et/ou qui est conçu dans le maître (104) même, **en ce que** l'ensemble de passage de gaz (112) encadre le maître (104) côté périphérie et **en ce que** l'ensemble de passage de gaz (112) est formé par une fente ou par un ensemble de perçage comprenant plusieurs perçages.

4. Table d'exposition (100) selon l'une quelconque des revendications 1 à 3,
**caractérisé en ce qu'**un appareil d'étalement (120) est présent afin d'étaler la section de film (202) à exposer sur le maître (104), et **en ce que** l'appareil d'étalement (120) comprend un chariot (124) mobile entre deux butées (136), au niveau duquel est logé un rouleau presseur (122) logé de manière rotative sur un axe de rotation et interagissant avec la section de film (202).

5. Table d'exposition (100) selon la revendication 4, **caractérisée en ce que**
le chariot (124) est logé avec possibilité limitée de pivotement autour d'un axe de déplacement (126) orienté perpendiculairement par rapport à l'axe de rotation du rouleau presseur (122), et le rouleau presseur (122) est ainsi déplaçable entre une position levée et une position abaissée,
et **en ce que** respectivement une came de commande (128) est présente, laquelle est conçue afin de déplacer le rouleau presseur (122) entre la position levée et la position abaissée.

6. Table d'exposition (100) selon la revendication 4 ou 5, **caractérisée en ce qu'**un ensemble de ressort (130) est associé au chariot (124) sur son côté éloigné du maître (104), ensemble qui règle ou prédéfinit la pression de pressage du rouleau presseur (122) sur le maître (104) ou sur la section de film (202) se trouvant sur le maître (104).

7. Table d'exposition (100) selon l'une quelconque des revendications 4 à 6,
**caractérisée en ce que** le rouleau presseur (122) est logé de manière rotative au niveau d'un bras de retenue (132), lequel est fixé au moyen d'un axe de pivotement (134) orienté perpendiculairement à l'axe de rotation au chariot (124) de telle manière que le bras de retenue (132) et ainsi le rouleau presseur (122) soient logés avec une possibilité limitée de pivotement par rapport au chariot (124).

8. Table d'exposition (100) selon l'une quelconque des revendications 1 à 7,
**caractérisée en ce que** le premier appareil de levage de film (138) et/ou l'appareil de levage de film (140) comprend un rouleau de levage de film (142) rotatif autour d'un axe.

9. Table d'exposition (100) selon la revendication 8, **caractérisée en ce que** le premier appareil de levage de film (138) et/ou le second appareil de levage de film (140) comprend un rouleau de guidage (144) agencé parallèlement à l'axe du rouleau de levage de film (142), lequel rouleau de guidage est logé de manière rotative au niveau d'un bras de levier (146) pivotant de manière limitée autour de l'axe.

10. Procédé d'introduction d'un hologramme en volume dans une section de film (202) d'un film holographique (200), comprenant les étapes suivantes :
- le transport de la section de film (202) à exposer vers un maître (104) reçu dans un appareil de retenue (102) au moyen d'un appareil de transport de film (106),
- la fixation de la section de film (202) à exposer par application d'une dépression au niveau ou autour du maître (104) au moyen d'un appareil à air comprimé (108) et
- l'exposition au moins d'une partie de la section de film au moyen d'un appareil d'exposition (302),
dans lequel le film holographique (200) est maintenu pour la fixation de la section de film (202) par rapport au maître (104) de telle manière que la surface de la section de film (202) à exposer et la surface du maître (104) soient orientées en s'étendant vers ou loin l'une de l'autre selon un angle aigu, et dans lequel la section de film (202) est étalée sur le maître (104) à partir de l'angle aigu au moyen d'un appareil d'étalement (120),
et dans lequel pour l'exposition de plusieurs sections de film (202) du film holographique (200), l'angle aigu est agencé en alternance sur le côté du maître (104) placé en aval du film et sur le côté du maître (104) placé en amont du film, et en ce que l'appareil d'étalement (120) étale la section de film (202) à exposer de manière correspondante, également en alternance à partir du côté du maître (104) placé en aval du film et à partir du côté du maître (104) placé en amont du film.

11. Procédé selon la revendication 10, **caractérisé en ce que** l'appareil à air comprimé (108) fournit pendant le transport du film holographique (200) une dépression de telle manière que le film holographique (200) glisse sur un coussin d'air.
